# EUROPEAN PATENT APPLICATION

(11) **EP 4 807 807 A1**
(43) Date of publication of application: **16.09.2026**
(21) Application number: 26164468.6
(22) Date of filing: 12.03.2026
(51) Int. Cl.: H01M 4/38, H01M 4/583

(54) **ANODE ACTIVE MATERIAL, METHOD FOR PREPARING SAME, AND LITHIUM SECONDARY BATTERY INCLUDING SAME**

(30) Priority: 13.03.2025 KR 20250032633
(71) Applicant: Hansol Chemical Co., Ltd, Seoul 06169 (KR)
(72) Inventor: PARK, Su-Hyun, Iksan-si, Jeollabuk-do 54524 (KR); KANG, Sung-Hwan, Iksan-si, Jeollabuk-do 54524 (KR); JANG, Bo-Ok, Iksan-si, Jeollabuk-do 54524 (KR); CHOE, Yeong-Hwa, Iksan-si, Jeollabuk-do 54524 (KR); AHN, Jun-Uk, Iksan-si, Jeollabuk-do 54524 (KR); YIM, Hyeon-Min, Iksan-si, Jeollabuk-do 54524 (KR); PARK, Min-Jee, Iksan-si, Jeollabuk-do 54524 (KR); CHOI, Su-Min, Iksan-si, Jeollabuk-do 54524 (KR); KIM, Chang-Beom, Iksan-si, Jeollabuk-do 54524 (KR); KWON, Se-Man, Iksan-si, Jeollabuk-do 54524 (KR)
(74) Representative: Ipsilon

(57) **Abstract**

Proposed are an anode active material, a method for preparing the same, an electrode including the anode active material, and a secondary battery including the same, in which when a charge curve of a charge-discharge cycle measured by incremental capacity analysis (ICA) performed on a half-cell is converted into a differential capacity versus voltage curve (dQ/dV) by normalizing the charge curve with respect to the total charge capacity of each cell, the maximum peak height (Peak A) observed in a voltage region of 0.4 to 0.5 V is equal to or greater than 3.5 V⁻¹.

## Description

### BACKGROUND OF THE INVENTION

### Field of the Invention

The present disclosure relates generally to an anode active material, a method for preparing the same, and a lithium secondary battery including the same. More particularly, the present disclosure relates to an anode active material in which the crystallinity of silicon is improved through a heat treatment process proposed herein, a method for preparing the same, and a lithium secondary battery including the same.

Additionally, the present disclosure relates to an anode active material capable of providing a secondary battery having high capacity and high initial coulombic efficiency (ICE), based on incremental capacity analysis (ICA) of a half-cell including the anode active material according to the present disclosure, and to a method for preparing the same and a lithium secondary battery including the same.

### Description of the Related Art

Lithium ion batteries (LIBs) possess high energy density and design flexibility, and thus have been widely adopted as primary power sources for mobile electronic devices. Their application range is rapidly expanding into electric vehicles (EVs) and energy storage systems (ESS) for renewable energy.

To meet the requirements of these emerging applications, continuous research efforts have been directed toward the development of LIB materials exhibiting higher energy density and extended cycle life.

In particular, various anode materials, including carbonaceous materials as well as silicon, tin, and germanium, have been extensively investigated.

Among these candidates, silicon-based anode materials have attracted significant attention because they offer substantially higher theoretical energy density compared to commercially available graphite anodes.

Despite this advantage, silicon-based anode materials suffer from critical drawbacks. Specifically, unstable solid electrolyte interphase (SEI) layers are formed due to parasitic reactions between a silicon surface and an electrolyte, leading to deterioration of electrochemical performance. Additionally, severe volume expansion during charge-discharge cycling induces internal stress, resulting in fragmentation of the electrode material.

To mitigate these issues, research has focused on structural stabilization strategies that mitigate volume expansion and suppress interfacial degradation. Representative approaches include the utilization of oxygen-containing silicon materials (e.g., SiOx) and the nanosizing of silicon particles in carbon-containing silicon materials (Si/C composites).

Nevertheless, limitations in achieving sufficient cycle-life improvement remain. Accordingly, there is a continued demand for an advanced manufacturing process for a silicon-based anode active material capable of effectively suppressing volume expansion while simultaneously enhancing the cycle life of batteries.

The foregoing is intended merely to aid in the understanding of the background of the present disclosure, and is not intended to mean that the present disclosure falls within the purview of the related art that is already known to those skilled in the art.

### Documents of Related Art

(Patent document 1) Korean Patent Application Publication No. 10-2021-0150769

### SUMMARY OF THE INVENTION

The present disclosure aims to solve the problem of increased internal resistance in an anode material caused by an increase in oxygen content that may occur during the nanosizing of silicon particles in the production of a silicon-based anode material, and to provide an anode active material optimized for high capacity and high efficiency.

Accordingly, an objective of the present disclosure is to provide an anode active material for a long-life secondary battery having high capacity and high energy density.

Another objective of the present disclosure is to provide a method for preparing a silicon-based anode active material, which enables mass production of a high-efficiency anode active material at low cost by optimizing the preparation process so as to minimize unnecessary oxidation and other degradation phenomena that may occur during the production of the silicon-based anode material.

Still another objective of the present disclosure is to provide an electrode including the anode active material and a lithium secondary battery including the same.

The objectives of the present disclosure are not limited to those mentioned above, and other objectives not mentioned will be clearly understood by those skilled in the art from the description provided hereinafter.

In order to achieve the above objectives, according to one aspect of the present disclosure, there is provided an anode active material, in which when a charge curve of a charge-discharge cycle measured by incremental capacity analysis (ICA) is converted into a differential capacity versus voltage curve (dQ/dV) by normalizing the charge curve with respect to a total charge capacity of each cell, a maximum peak height (Peak A) observed in a voltage region of 0.4 to 0.5 V may be equal to or greater than 3.5 V⁻¹.

Here, the ICA may be performed on a half-cell including the anode active material.

According to another aspect of the present disclosure, there is provided a method for preparing the anode active material, the method including: a first step of pulverizing a metal-containing particle; a second step of preparing a precursor powder by spray-drying a solution containing the pulverized metal-containing particle; a third step of mixing and compositing the precursor powder with amorphous carbon, crystalline carbon, or a combination thereof; a fourth step of heat-treating the composited powder, in which the metal may include at least one selected from the group consisting of Si, Al, Sn, Ge, Pb, In, As, Sb, P, and Ag, and the first step may be performed with a milling energy of equal to or greater than 7 kWh/kg.

According to still another aspect of the present disclosure, there is provided a lithium secondary battery, including: an anode including the anode active material; a cathode positioned opposite to the anode; and an electrolyte disposed between the anode and the cathode.

According to the anode active material of the present disclosure, although the crystallinity of silicon may be partially deteriorated during the nanosizing process, which may lead to an increase in oxygen content and a consequent increase in internal resistance of the anode material, the heat-treatment process proposed herein enables the recovery of the silicon grain size and improvement of crystallinity.

Furthermore, by utilizing the maximum peak height observed in the voltage region of 0.4 to 0.5 V (Peak A) and the maximum peak height observed in the voltage region of 0.1 to 0.2 V (Peak B), obtained through incremental capacity analysis (ICA) performed on a half-cell including the anode active material of the present disclosure, it is possible to ensure suppression of silicon carbide (SiC) formation and recovery of crystallinity, thereby providing a secondary battery having high capacity and high initial coulombic efficiency (ICE).

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a graph illustrating a charge curve obtained by incremental capacity analysis (ICA) of a half-cell including an anode active material according to Example 5 of the present disclosure, representing normalized differential capacity (dQ/dV) data acquired at the charge step; and
FIG. 2 is a graph illustrating a charge curve obtained by incremental capacity analysis (ICA) of a half-cell including an anode active material according to Comparative Example 2 of the present disclosure, representing normalized differential capacity (dQ/dV) data acquired at the charge step.

### DETAILED DESCRIPTION OF THE INVENTION

The terms and words used in the present specification and claims should not be interpreted as being limited to typical meanings or dictionary definitions, but should be interpreted as having meanings and concepts relevant to the technical scope of the present disclosure based on the rule according to which an inventor can appropriately define the concept of the term to describe most appropriately the best method he or she knows for carrying out the present disclosure.

Therefore, embodiments disclosed herein are merely preferred examples of the present disclosure and do not fully describe the technical idea of the present disclosure, so it will be appreciated that there can be various equivalents and alterations thereto at a filing date of the present application.

As used herein, the singular forms are intended to include the plural forms as well, unless the context clearly indicates otherwise. It will be further understood that the terms "comprise", "include", "have", etc., when used in this specification, specify the presence of stated features, integers, steps, operations, elements, components, and/or combinations thereof but do not preclude the presence or addition of one or more other features, integers, steps, operations, elements, components, and/or combinations thereof.

In this specification, when various parameters are given as either a range, a preferred range, or a list of upper preferable values and/or lower preferable values, this is to be understood as specifically disclosing all ranges formed from any pair of any upper range limits or preferred values and any lower range limits or preferred values, regardless of whether the ranges are separately disclosed.

When a range of numerical values is recited herein, unless otherwise stated, the range is intended to include the endpoints thereof, and all integers and fractions within the range.

The scope of the present disclosure not be limited to specific values used in defining a range for a certain parameter.

In this specification, "a to b" and "a~b" indicating a numerical range are defined as ≥ a and ≤ b.

Hereinafter, exemplary embodiments of the present disclosure will be described in detail, but the present disclosure is not limited thereto.

In the present specification, the terms "charge" and "discharge" are defined based on a half-cell employing a lithium metal as a counter electrode.

That is, when an anode (half-cell) is combined with a cathode to form a full cell, the conceptual meaning of these terms is reversed.

Accordingly, the term "charge", as used herein, refers to a delithiation reaction of an anode (half-cell), which corresponds to a "discharge" reaction in a full-cell when paired with a cathode.

An anode active material according to one aspect of the present disclosure is characterized in that a charge curve of a charge-discharge cycle measured by incremental capacity analysis (ICA) is converted into a differential capacity versus voltage curve (dQ/dV) by normalizing the charge curve with respect to the total charge capacity of each cell. In the resulting dQ/dV curve, the maximum peak height (Peak A) observed in a voltage region of 0.4 to 0.5 V may be equal to or greater than 3.5 V⁻¹.

In this case, the ICA is performed on a half-cell including the anode active material.

Here, the ICA refers to a diagnostic technique in which a battery charge curve is mathematically differentiated to obtain a differential capacity profile (dQ/dV) from "capacity (Q) versus voltage (V) data", thereby enabling resolved (amplified) observation of capacity variations within each voltage region.

In one embodiment, the Peak A may be equal to or greater than 3.5 V⁻¹.

For example, the Peak A may be equal to or greater than 3.7 V⁻¹, equal to or greater than 4 V⁻¹, equal to or greater than 5 V⁻¹, equal to or greater than 6 V⁻¹, 3.5 to 7.5 V⁻¹, 3.5 to 7 V⁻¹, 3.5 to 6.5 V⁻¹, 4 to 7.5 V⁻¹, 4 to 7 V⁻¹, 4 to 6.5 V⁻¹, or 5 to 7 V⁻¹.

In one embodiment, the maximum peak height (Peak B) observed in a voltage region of 0.1 to 0.2 V may be equal to or greater than 0.5 V⁻¹.

For example, the Peak B may be equal to or greater than 1 V⁻¹, equal to or greater than 1.5 V⁻¹, 1 to 3 V⁻¹, 1 to 2 V⁻¹, 1.4 to 2.5 V⁻¹, 1.5 to 3 V⁻¹, 1.5 to 2 V⁻¹, or 1.5 to 1.75 V⁻¹.

In one embodiment, the ratio of the maximum peak height (Peak A) observed in the voltage region of 0.4 to 0.5 V to the maximum peak height (Peak B) observed in the voltage region of 0.1 to 0.2 V (Peak A/Peak B) may be equal to or greater than 2.

For example, the ratio may be equal to or greater than 2.2, 2 to 5, 2 to 4.5, 2.2 to 5, or 2.2 to 4.5.

Specifically, the Peak A, defined as the maximum peak height observed in the voltage region of 0.4 to 0.5 V, may represent a signal that becomes more pronounced as the crystallinity of the silicon-based anode material increases. This peak may be interpreted as reflecting a characteristic voltage region associated with specific phase transition reactions occurring during the interaction between silicon and lithium.

Additionally, the Peak B, defined as the maximum peak height observed in the voltage region of 0.1 to 0.2 V, may be interpreted as a signal that reflects the characteristic voltage response generated when crystalline carbon, such as highly ordered graphitic carbon, present in an electrode interacts with lithium ions through intercalation and delithiation reactions.

That is, the maximum peak height (Peak A) observed in the voltage region of 0.4 to 0.5 V may be interpreted as reflecting the crystallinity and phase transition behavior of the silicon-based anode material, whereas the maximum peak height (Peak B) observed in the voltage region of 0.1 to 0.2 V may be interpreted as reflecting the structural characteristics of crystalline carbon.

In one embodiment, the ICA may be performed under the following conditions:
a. The half-cell is configured with an anode;
b. The discharge process (lithiation) is carried out from the open circuit voltage (OCV) down to 0.01 V;
c. The charge process (delithiation) is carried out from 0.01 up to 1.5 V;
d. The current density is set to 0.1 C;
e. The data recording interval is set to one data point per minute (1 point/min), and the cycling is conducted for at least 10 hours to collect 600 or more data points.

In this case, charge process data obtained from the ICA is utilized for analysis.

In one embodiment, the ICA may be performed with a current density set to 0.05 to 0.3 C, and a voltage range adjusted to 0.01 to 1.5 V.

For example, the ICA may be performed with a current density of 0.05 to 0.1 C and a voltage range of 0.01 to 1.5 V.

In one embodiment, the data recording interval may be set to one data point per 30 seconds to 5 minutes (1 point/min).

Additionally, a charge curve of a charge-discharge cycle measured by the ICA may be converted into a differential capacity versus voltage curve (dQ/dV) by normalizing the charge curve with respect to the total charge capacity (Qₜₒₜₐₗ) in order to compensate for capacity deviations among individual cells, and peak analysis may be subsequently performed based on the resulting curve.

That is, based on the charge curve data acquired from the charge-discharge cycle, a normalized incremental capacity function (f(V₁)) with respect to the total charge capacity (Qₜₒₜₐₗ) may be calculated using the following Equation 1: $f \left({V}_{1}\right) = \frac{1}{{Q}_{total}} \times \frac{{Q}_{2} - {Q}_{1}}{{V}_{2} - {V}_{1}} \left[\frac{1}{V}\right] ,$

In Equation 1 above, Q and V represent capacity and voltage data, respectively, Qₜₒₜₐₗ represents the total charge capacity; and f corresponds to dQ/dV data (differential value of capacity with respect to voltage).

Equation 1 above represents a process in which the voltage-capacity variation between two adjacent data points, (Q₁, V₁) and (Q₂, V₂), is calculated using a finite difference method. Thereafter, a scaling factor of l/Qₜₒₜₐₗ is applied to normalize the resulting dQ/dV data.

In one embodiment, the ICA may be performed by first differentiating the charge curve using finite difference to obtain dQ/dV data, and then applying a moving average filter to remove noise by processing 20 consecutive data points for each voltage step.

That is, in practical measurements, noise may arise from instrument interference or parasitic side reactions. To mitigate such noise and obtain a smoother differential capacity curve, a moving average filter as expressed in the following Equation 2 may be applied. ${f}_{i , filtered} = average \left({f}_{i - N + 1}, {f}_{i - N + 2}, ⋯, {f}_{i}\right)$

In Equation 2 above, N represents the size of the moving average filter size. When filtering the i-th data point, the arithmetic mean of the values f from i-N+1 to i is calculated. However, in an initial data region where a sufficient number of previous f values are not yet available, the average is computed using only the available f values.

In one embodiment, the anode active material may include at least one metal-containing particle, and the metal-containing particle may include at least one selected from the group consisting of Si, Al, Sn, Ge, Pb, In, As, Sb, P, and Ag.

In one embodiment, the anode active material may not have a core-shell structure.

That is, the anode active material may have a particle structure in which no shell layer is formed on the surface of the particle.

In one embodiment, the metal-containing particle may have a grain size of equal to or greater than 15 nm.

For example, the grain size may be equal to or greater than 16 nm, 15 to 25 nm, 15 to 20 nm, 16 to 25 nm, 16 to 20 nm, 15 to 18 nm, or 16 to 18 nm.

When the grain size of the metal-containing particle falls below the above-defined range, an increase in oxygen content may lead to an increase in internal resistance of the anode.

In one embodiment, the volumetric median particle diameter (Dv50) of the metal-containing particle may be 80 to 200 nm.

For example, the Dv50 may be 80 to 160 nm or 80 to 120 nm.

The volumetric median particle diameter (Dv50) refers to the particle diameter at which, when the particle size distribution is evaluated on a volume basis, 50% of the total particle volume is composed of particles having a diameter smaller than that value, and the remaining 50% is composed of particles having a diameter larger than that value.

That is, the Dv50 represents the particle size corresponding to half of the total particle volume distribution.

For example, the volumetric median particle diameter (Dv50) of the metal-containing particle being 80 to 200 nm means that the Dv50 value falls within the range of 80 to 200 nm.

The volumetric median particle diameter (Dv50) may be measured using a laser diffraction particle size analyzer.

For example, 0.1 g of a sample powder is added to 100 mL of 2-propanol, and the mixture is subjected to ultrasonic treatment for 5 minutes using an ultrasonic disperser to ensure uniform dispersion of particles. The dispersed sample is then introduced into a laser diffraction particle size analyzer, and the scattering light pattern generated upon irradiation with a laser beam is detected by sensors. The particle size distribution is then calculated using analysis software based on Mie scattering theory. The measurement is repeated three times under identical conditions, and the average particle size distribution obtained from the three measurements is adopted as final data. Here, the Dv50 is defined as the particle diameter corresponding to 50% cumulative volume in the volume-based particle size distribution.

When the volumetric median particle diameter (Dv50) of the metal-containing particle exceeds the above-defined range, a battery having high initial coulombic efficiency may be obtained, but the overall battery capacity may be significantly reduced. On the other hand, when the Dv50 falls below the above-defined range, the increased specific surface area may lead to an increase in oxygen content of the anode active material, which in turn may cause an increase in internal resistance of the anode.

In one embodiment, the metal-containing particle may be a silicon (Si)-containing particle.

In one embodiment, the metal-containing particle may include at least one selected from the group consisting of a silicon particle, a silicon oxide particle, a silicon carbide particle, and a silicon alloy particle.

In one embodiment, the metal-containing particle may include metal-grade silicon, industrial-grade silicon, foundry-grade silicon, or a combination thereof.

The silicon-containing particle may be represented by the following Chemical Formula 1:

[Chemical Formula 1] SiOx (0≤x≤0.5)

In Chemical Formula 1 above, when x exceeds 0.5, the increased oxygen content may adversely affect both battery capacity and coulombic efficiency. That is, lithium ions react with oxygen to form irreversible by-products such as Li₂O and lithium silicate (LiₓSi_{y}O_{z}). As a result, lithium ions that have reacted within the anode may become trapped and unable to return to the electrolyte or cathode, leading to capacity loss and low coulombic efficiency.

Additionally, the silicon carbide may be, for example, SiC, and the silicon alloy may be, for example, a Si-Z alloy (where Z represents at least one element selected from the group consisting of an alkali metal, an alkaline earth metal, a Group 13 element, a Group 14 element, a transition metal, a rare earth element, and a combination thereof, and is not Si).

In one embodiment, the anode active material may further include amorphous carbon, crystalline carbon, or a combination thereof.

The anode active material may further include only amorphous carbon. Additionally, when the anode active material further includes amorphous carbon, crystalline carbon, or a combination thereof, the content of amorphous carbon may be greater than that of crystalline carbon.

In one embodiment, the weight ratio of the amorphous carbon to the crystalline carbon (weight of the amorphous carbon : weight of the crystalline carbon) may be 1:1 to 5:1.

For example, the weight ratio of the amorphous carbon to the crystalline carbon may be 1:1 to 4:1, 2:1 to 5:1, or 2:1 to 4:1.

In one embodiment, the amorphous carbon may be formed from at least one selected from the group consisting of coal pitch, mesophase pitch, petroleum pitch, coke, carbon black, tar, coal oil, petroleum heavy oil, organic synthetic pitch, sucrose, naphthalene resin, polyvinyl alcohol resin, furfuryl alcohol resin, polyacrylonitrile resin, polyamide resin, phenol resin, furan resin, cellulose resin, styrene resin, epoxy resin, vinyl chloride resin, block copolymer, polyol, and polyimide resin.

In one embodiment, the crystalline carbon may be formed from at least one selected from the group consisting of natural graphite, artificial graphite, expanded graphite, graphene, carbon black, and fullerene.

In one embodiment, the anode active material may include a carbon material in an amount of 20 to 70 wt%, based on 100 wt% of the total weight of the anode active material.

For example, the amount of the carbon material may be 25 to 65 wt% or 30 to 55 wt%, based on 100 wt% of the total weight of the anode active material.

When the amount of the carbon material exceeds the above-defined range, the battery capacity may become significantly reduced. On the other hand, when the amount of the carbon material falls below the above-defined range, a high theoretical capacity may be achieved, but the initial coulombic efficiency may be significantly lowered.

In one embodiment, the weight ratio of the metal-containing particle to the carbon material (weight of the metal-containing particle : weight of the carbon material) may be 3:7 to 9:1.

For example, the weight ratio of the metal and the carbon (weight of the metal : weight of the carbon) may be 3:7 to 8:2, 3:7 to 7:3, 4:6 to 9:1, 4:6 to 8:2, or 4:6 to 7:3.

In one embodiment, the anode active material may have a volumetric median particle diameter (Dv50) of 3 to 20 µm.

For example, the Dv50 may be 3 to 18 µm or 3 to 15 µm.

The volumetric median particle diameter (Dv50) may be measured using a laser diffraction particle size analyzer.

When the Dv50 of the anode active material exceeds the above-defined range, the material may exhibit insufficient mechanical durability against volume expansion, leading to propagation of cracks that provide channels for the electrolyte to penetrate into the core of the particle.

In one embodiment, the specific surface area of the anode active material, as measured by Brunauer-Emmett-Teller (BET) analysis, may be equal to or less than 10 m²/g.

For example, the specific surface area may be equal to or less than 7 m²/g, equal to or less than 5 m²/g, equal to or less than 4 m²/g, 2 to 10 m²/g, 3 to 10 m²/g, or 4 to 10 m²/g.

When the specific surface area exceeds the above-defined range, the excessively high surface area may increase slurry viscosity during anode preparation. As a result, anode coating may become impossible.

A method for preparing the anode active material according to another aspect of the present disclosure includes: a first step of pulverizing a metal-containing particle; a second step of preparing a precursor powder by spray-drying a solution containing the pulverized metal-containing particle; a third step of mixing and compositing the precursor powder with amorphous carbon, crystalline carbon, or a combination thereof; and a fourth step of heat-treating the composited powder.

The metal may include at least one selected from the group consisting of Si, Al, Sn, Ge, Pb, In, As, Sb, P, and Ag.

The first step may be performed with a milling energy of equal to or greater than 7 kWh/kg.

For example, the first step may be performed with a milling energy of equal to or greater than 10 kWh/kg.

For example, the milling energy may be equal to or greater than 15 kWh/kg, 7 to 25 kWh/kg, 10 to 25 kWh/kg, 15 to 25 kWh/kg, 17 to 23 kWh/kg, 7 to 23 kWh/kg, or 10 to 23 kWh/kg.

When the milling energy exceeds the above-defined range, process costs may increase significantly.

In one embodiment, the solution used for spray drying may include an alcohol-based solvent. The alcohol-based solvent may include at least one selected from methanol, ethanol, 1-propanol, 2-propanol, 1-butanol, 2-butanol, isobutanol, tert-butanol, or a combination thereof.

In one embodiment, the precursor powder may have a volumetric median particle diameter (Dv50) of 1 to 15 µm.

For example, the precursor powder may have a Dv50 of 5 to 15 µm, 5 to 10 µm, or 7 to 10 µm.

In one embodiment, the amorphous carbon may be formed from at least one selected from the group consisting of coal pitch, mesophase pitch, petroleum pitch, coke, carbon black, tar, coal-based oil, petroleum heavy oil, organic synthetic pitch, sucrose, naphthalene resin, polyvinyl alcohol resin, furfuryl alcohol resin, polyacrylonitrile resin, polyamide resin, phenol resin, furan resin, cellulose resin, styrene resin, epoxy resin, vinyl chloride resin, block copolymer, polyol, and polyimide resin. In one embodiment, the crystalline carbon may be formed from at least one selected from the group consisting of natural graphite, artificial graphite, expanded graphite, graphene, carbon black, and fullerene.

Natural graphite refers to naturally occurring graphite, and examples thereof include flake graphite, high-crystalline graphite, and amorphous (microcrystalline or cryptocrystalline) graphite. Artificial graphite refers to artificially synthesized graphite, typically produced by heat-treating amorphous carbon at high temperatures. Examples thereof include primary graphite (electrographite), secondary graphite, and graphite fiber.

Expanded graphite refers to graphite obtained by the intercalation of chemical species such as acid or alkali between graphene layers, followed by heat treatment to expand the interlayer spacing in the vertical direction of the molecular structure. Graphene includes a single layer or multiple single layers of graphite.

Carbon black is a crystalline material having lower structural regularity than graphite. When carbon black is heated at approximately 3,000°C for an extended period, it may be converted into graphite through graphitization. Fullerene refers to a carbon mixture containing at least 3 wt% of fullerene, which is a polyhedral compound composed of 60 or more carbon atoms. As the first carbonaceous material, the above-described crystalline carbon materials may be used alone or a combination of two or more thereof. For example, natural graphite or artificial graphite may be used. The crystalline carbon may have a spherical, plate-like, fibrous, tubular, or powder form.

As the amorphous carbon, pitch is preferably used. The pitch may have a softening point of 100°C to 250°C. In particular, petroleum pitch or coal pitch having a quinolone insoluble (QI) content of equal to or less than 5 wt%, more preferably equal to or less than 1 wt%, may be used.

Meanwhile, natural graphite is preferably used as the crystalline carbon. High-purity grade graphite having a fixed carbon content of equal to or greater than 99 wt%, more preferably equal to or greater than 99.95 wt%, may be used.

Additionally, flake graphite may be particularly suitable for enhancing electrical conductivity through contact with the metal-containing particle.

In one embodiment, the compositing step may be performed by a physical method.

The physical method may include at least one selected from the group consisting of high-energy processes such as milling, stirring, mixing, and compression.

For example, the compositing step may be performed using a custom-designed mechanical compositing apparatus. In mechanical compositing, powder particles contained in a vessel may be mixed and dispersed by rotation of stirring blades, thereby enabling the formation of an integrated composite of dissimilar particles.

In another example, the milling step may be performed by a physical method using a bead mill.

Meanwhile, the compositing step may be carried out under the following conditions: reaction time: 1 minute to 1 hour; reaction temperature: 40°C to 250°C; and reaction atmosphere: ambient atmosphere or an inert atmosphere.

In one embodiment, the heat-treatment temperature in the fourth step may be 850°C to 950°C.

For example, the heat-treatment temperature may be 850°C to 930°C, 850°C to 900°C, or preferably 900°C.

When the heat-treatment temperature exceeds the above-defined range, the formation of silicon carbide (SiC) may reduce both battery capacity and coulombic efficiency.

In one embodiment, the heat-treatment time in the fourth step may be 3 to 15 hours.

For example, the heat-treatment time may be 3 to 12 hours, 5 to 12 hours, or 5 to 10 hours.

An electrode according to another aspect of the present disclosure may include the above-described anode active material. A lithium secondary battery may include: the electrode including the anode active material as an anode; a cathode positioned opposite to the anode; and an electrolyte disposed between the anode and the cathode.

In one embodiment, a secondary battery may include the electrode including the anode active material as an anode; a cathode positioned opposite to the anode; and an electrolyte disposed between the anode and the cathode. The secondary battery may have an initial charge capacity of equal to or greater than 1,400 mAh/g and an initial coulombic efficiency of equal to or greater than 85.0%.

For example, the initial charge capacity may be 1,400 to 2,000 mAh/g, 1,400 to 1,800 mAh/g, 1,400 to 1,600 mAh/g, or 1,400 to 1,500 mAh/g.

For example, the initial coulombic efficiency may be 85% to 95%, 87% to 92%, or 88% to 92%.

In addition to the anode active material described above, the anode may further include an anode active material commonly used in the art for lithium batteries. Such a commonly used anode active material may include, for example, at least one selected from the group consisting of lithium metal, a lithium-alloyable metal, a transition metal oxide, a non-transition metal oxide, and a carbonaceous material.

For example, the lithium-alloyable metal may include Si, Sn, Al, Ge, Pb, Bi, Sb, an Si-Y alloy (where Y is an alkali metal, an alkaline earth metal, a Group 13 element, a Group 14 element, a transition metal, a rare earth element, or a combination thereof, and is not Si), or an Sn-Y alloy (where Y is an alkali metal, an alkaline earth metal, Group 13 to Group 16 elements, a transition metal, a rare earth element, or a combination thereof, and is not Sn). The element Y may include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

For example, the transition metal oxide may include lithium titanate, vanadium oxide, lithium vanadium oxide, or the like.

For example, the non-transition metal oxide may include SnO₂, SiOx (0<x≤2), or the like. The carbonaceous material may include crystalline carbon, amorphous carbon, or a mixture thereof. The crystalline carbon may include graphite having an amorphous, plate-like, flake, spherical, or fibrous morphology, such as natural graphite or artificial graphite. The amorphous carbon may include soft carbon (low-temperature calcined carbon), hard carbon, mesophase pitch carbon, calcined coke, or the like.

When the anode active material is used together with the carbonaceous material, oxidation reactions of the silicon-based active material may be suppressed. Additionally, a stable SEI layer may be effectively formed, and electrical conductivity may be improved, thereby enhancing lithium charge-discharge characteristics.

The commonly used anode active material described above may be blended with the anode active material of the present disclosure, coated on the surface thereof, or used in any other suitable combined form.

The binder used in the anode active material composition serves to promote binding between the anode active material and a conductive agent, as well as adhesion to a current collector. The binder may be added in an amount of 1 to 50 parts by weight based on 100 parts by weight of the anode active material. For example, the binder may be added in an amount of 1 to 30 parts by weight, 1 to 20 parts by weight, or 1 to 15 parts by weight based on 100 parts by weight of the anode active material.

The binder may include, for example, polyvinylidene fluoride (PVDF), polyvinylidene chloride, polybenzimidazole, polyimide, polyvinyl acetate, polyacrylonitrile, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polystyrene, polymethyl methacrylate, polyaniline, acrylonitrile-butadiene-styrene, phenolic resin, epoxy resin, polyethylene terephthalate, polytetrafluoroethylene, polyphenylene sulfide, polyamide-imide, polyetherimide, polyethylene sulfone, polyamide, polyacetal, polyphenylene oxide, polybutylene terephthalate, ethylene-propylene-diene terpolymer (EPDM), sulfonated EPDM, styrene-butadiene rubber, fluoro rubber, or various copolymers thereof.

The anode may further include a conductive agent in order to provide an effective electron transport pathway within the anode active material and thereby improve electrical conductivity of the anode active material.

The conductive agent may be any conductive material commonly used in lithium batteries, and may include, for example, a carbonaceous material, such as carbon black, acetylene black, Ketjen black, or carbon fiber (e.g., vapor-grown carbon fibers); a metal-based material, such as metal powder or metal fiber of copper, nickel, aluminum, silver, or the like; a conductive polymer, such as a polyphenylene derivative; or a mixture thereof. The amount of the conductive agent may be appropriately adjusted. For example, the weight ratio of the anode active material to the conductive agent may be 99:1 to 90:10.

The solvent may include N-methyl-2-pyrrolidone (NMP), acetone, water, or the like. The solvent may be used in an amount of 1 to 10 parts by weight based on 100 parts by weight of the anode active material. When the amount of the solvent falls within the above-defined range, formation of a uniform active material layer is facilitated.

Additionally, the current collector may have a thickness of 3 to 500 µm. The current collector is not particularly limited as long as it has electrical conductivity without causing chemical changes in the battery. The current collector may include, for example, copper, stainless steel, aluminum, nickel, titanium, calcined carbon, copper or stainless steel surface-treated with carbon, nickel, titanium, silver, or the like, or an aluminum-cadmium alloy.

Additionally, the current collector may have fine surface irregularities formed thereon to enhance adhesion strength with the anode active material, and may be used in various forms, such as a film, a sheet, a foil, a net, a porous body, a foam, or a nonwoven fabric.

The prepared anode active material composition may be directly coated onto the current collector to form an anode electrode plate. Alternatively, the composition may be cast onto a separate support, and the resulting anode active material film may be peeled off from the support and laminated onto a copper foil current collector to obtain an anode electrode plate. The anode is not limited to the above-described forms and may be fabricated in other suitable forms.

In addition to being used for manufacturing electrodes of lithium secondary batteries, the anode active material composition may also be printed onto a flexible electrode substrate and applied to the fabrication of printable batteries.

Separately, in order to manufacture a cathode, a cathode active material composition may be prepared by mixing a cathode active material, a conductive agent, a binder, and a solvent.

The cathode active material may be a lithium-containing metal oxide, and any material commonly used in the art may be used without particular limitation.

For example, the cathode active material may include a compound represented by any one of the following chemical formulae: LiₐA_{1-b}B_{b}D₂ (where 0.90≤a≤1.8 and 0≤b≤0.5); LiₐE_{1-b}B_{b}O_{2-c}D_{c} (where 0.90≤a≤1.8, 0≤b≤0.5, and 0≤c≤0.05); LiE_{2-b}B_{b}O_{4-c}D_{c} (where 0≤b≤0.5 and 0≤c≤0.05); LiₐNi_{1-b-c}Co_{b}B_{c}D_{α} (where 0.90≤a≤1.8, 0≤b≤0.5, 0≤c≤0.05, and 0<α≤2); LiₐNi_{1-b-c}Co_{b}B_{c}O_{2-α}F_{α} (where 0.90≤a≤1.8, 0≤b≤0.5, 0≤c≤0.05, and 0<α<2); LiₐNi_{1-b-c}Co_{b}B_{c}O_{2-α}F_{α} (where 0.90≤a≤1.8, 0≤b≤0.5, 0≤c≤0.05, and 0<α<2); LiₐNi_{1-b-c}Mn_{b}B_{c}D_{α} (where 0.90≤a≤1.8, 0≤b≤0.5, 0≤c≤0.05, and 0<α≤2); LiₐNi_{1-b-c}Mn_{b}B_{c}O_{2-α}F_{α} (where 0.90≤a≤1.8, 0≤b≤0.5, 0≤c≤0.05, and 0<α<2); LiaNi_{1-b-c}Mn_{b}B_{c}O_{2-α}F_{α} (where 0.90≤a≤1.8, 0≤b≤0.5, 0≤c≤0.05, and 0<α<2); LiₐNi_{b}E_{c}G_{d}O₂ (where 0.90≤a≤1.8, 0≤b≤0.9, 0≤c≤0.5, and 0.001≤d≤ 0.1); LiₐNi_{b}Co_{c}Mn_{d}GₑO₂ (where 0.90≤a≤1.8, 0≤b≤0.9, 0≤c≤0.5, 0≤d≤0.5, and 0.001≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMnG_{b}O₂ (where 0.90≤a≤1.8 and 0.001≤b≤0.1); LiₐMn₂G_{b}O₄ (where 0.90≤a≤1.8 and 0.001≤b≤0.1); QO₂; QS₂; LiQS₂; V₂O₅; LiV₂O₅; LiIO₂; LiNiVO₄; Li_{(3-f)}J₂(PO₄)₃ (0≤f≤2); Li_{(3-f)}Fe₂(PO₄)₃ (0≤f≤2); and LiFePO₄.

In the above formulae: A represents Ni, Co, Mn, or a combination thereof; B represents Al, Ni, Co, Mn, Cr, Fe, Mg, Sr, V, a rare earth element, or a combination thereof; D represents O, F, S, P, or a combination thereof; E represents Co, Mn, or a combination thereof; F represents F, S, P, or a combination thereof; G represents Al, Cr, Mn, Fe, Mg, La, Ce, Sr, V, or a combination thereof; Q represents Ti, Mo, Mn, or a combination thereof; I represents Cr, V, Fe, Sc, Y, or a combination thereof; and J represents V, Cr, Mn, Co, Ni, Cu, or a combination thereof.

Of course, these compounds may have a coating layer on the surfaces thereof, or may be mixed with a compound having a coating layer. The coating layer may include a coating element compound selected from an oxide, a hydroxide, an oxyhydroxide, an oxycarbonate, or a hydroxycarbonate of the coating element. The compounds constituting the coating layer may be amorphous or crystalline. The coating element contained in the coating layer may include Mg, Al, Co, K, Na, Ca, Si, Ti, V, Sn, Ge, Ga, B, As, Zr, or a mixture thereof. The coating layer may be formed by any suitable method (e.g., spray coating, dipping) that does not adversely affect the physical properties of the cathode active material, or other conventional coating techniques known in the art. Since such coating methods are well understood by those skilled in the art, detailed descriptions thereof are omitted.

For example, LiNiO₂, LiCoO₂, LiMnₓO₂ₓ (x=1, 2), LiNi₁₋ₓMnₓO₂ (0<x<1), LiNi_{1-x-y}CoₓMn_{y}O₂(0≤x≤0.5, 0≤y≤0.5), LiFeO₂, V₂O₅, TiS, MoS, or the like may be used as the cathode active material.

In the cathode active material composition, the conductive agent, the binder, and the solvent may be the same as those described above for the anode active material composition. In some cases, a plasticizer may be further added to the cathode active material composition and/or the anode active material composition to form pores within an electrode plate. The amounts of the cathode active material, the conductive additive, the binder, and the solvent may be determined within ranges commonly used in lithium batteries.

The cathode current collector may have a thickness of 3 to 500 µm and is not particularly limited as long as it exhibits high electrical conductivity without causing chemical changes in the battery. The cathode current collector may include, for example, stainless steel, aluminum, nickel, titanium, calcined carbon, or aluminum or stainless steel surface-treated with carbon, nickel, titanium, silver, or the like. The current collector may have fine surface irregularities formed thereon to enhance adhesion with the cathode active material, and may be used in various forms, such as a film, a sheet, a foil, a net, a porous body, a foam, or a nonwoven fabric.

The prepared cathode active material composition may be directly coated onto the cathode current collector and dried to fabricate a cathode electrode plate. Alternatively, the cathode active material composition may be cast onto a separate support, and the resulting film may be peeled from the support and laminated onto the cathode current collector to obtain a cathode electrode plate.

The cathode and the anode may be separated by a separator. Any separator commonly used in lithium batteries may be used. In particular, a separator having low resistance to ionic transport of electrolyte and excellent electrolyte wettability is preferred. For example, the separator may be formed from glass fiber, polyester, Teflon, polyethylene, polypropylene, polytetrafluoroethylene (PTFE), or a combination thereof, and may be in the form of a nonwoven fabric or a woven fabric. The separator may have a pore diameter of 0.01 to 10 µm and a thickness of 5 to 300 µm.

A lithium salt-containing non-aqueous electrolyte consists of a non-aqueous electrolyte and a lithium salt. The non-aqueous electrolyte may include a non-aqueous liquid electrolyte solution, an organic solid electrolyte, or an inorganic solid electrolyte.

The non-aqueous liquid solution may include, for example, an aprotic organic solvent such as N-methyl-2-pyrrolidone, propylene carbonate, ethylene carbonate, butylene carbonate, dimethyl carbonate, diethyl carbonate, γ-butyrolactone, 1,2-dimethoxyethane, tetrahydrofuran, 2-methyltetrahydrofuran, dimethyl sulfoxide, 1,3-dioxolane, formamide, dimethylformamide, acetonitrile, nitromethane, methyl formate, methyl acetate, triester phosphate, trimethoxymethane, dioxolane derivative, sulfolane, methyl sulfolane, 1,3-dimethyl-2-imidazolidinone, propylene carbonate derivative, tetrahydrofuran derivative, ether, methyl propionate, ethyl propionate, or the like.

The organic solid electrolyte may include, for example, a polyethylene derivative, a polyethylene oxide derivative, a polypropylene oxide derivative, a phosphate ester polymer, a polyagitation lysine, a polyester sulfide, a polyvinyl alcohol, a polyvinylidene fluoride, or a polymer containing an ionic dissociation group.

The inorganic solid electrolyte may include, for example, lithium nitride, halide, or sulfate of Li, such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, or Li₃PO₄-Li₂S-SiS₂.

The lithium salt may be any lithium salt commonly used in lithium batteries and preferably one that is readily soluble in the non-aqueous electrolyte. The lithium salt may include, for example, at least one of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, lithium chloroborate, lower aliphatic lithium carbonate, lithium 4-phenylborate, and imide.

Lithium secondary batteries may be classified as a lithium ion battery, a lithium ion polymer battery, and a lithium polymer battery depending on the type of separator and electrolyte used. They may also be classified depending on shape, such as cylindrical, prismatic, coin-type, and pouch-type, and depending on size, such as bulk-type or thin-film type.

Since methods for manufacturing such batteries are well known in the art, detailed descriptions thereof are omitted.

Hereinafter, the present disclosure will be described in more detail with reference to Examples. However, the following Examples are provided for illustrative purposes merely to further explain the present disclosure, and the scope of the present disclosure is not limited thereto.

### [Example 1]

A metal-grade silicon (MGS) particle having an average particle diameter (D50) of 800 to 1 µm was mixed in an amount of 1 part by weight with 10 parts by weight of isopropyl alcohol (IPA), and the mixture was introduced into a bead mill. The mixture was pulverized until the milling energy reached 20 kWh/kg to prepare a pulverized silicon dispersion (milling step).

Subsequently, the dispersion was subjected to spray drying to obtain a silicon precursor having a volumetric median particle diameter (Dv50) of 7.5 µm.

The prepared silicon precursor was then introduced into a mechanical compositing apparatus (manufactured in-house by Hansol Chemical) together with petroleum pitch and graphite at a weight ratio of 50:40: 10 (silicon precursor : pitch : graphite), and compositing was performed for 20 minutes. Thereafter, the resulting composite was heated at 900°C for 5 hours under a vacuum atmosphere to prepare a composite material (heat treatment step).

The composite material was then sieved through a 400-mesh screen to obtain a final anode active material.

### [Example 2]

An anode active material was prepared in the same manner as in Example 1, except that the heat-treatment time in the heat-treatment step was adjusted to 10 hours.

### [Example 3]

An anode active material was prepared in the same manner as in Example 1, except that the heat-treatment time in the heat-treatment step was adjusted to 10 hours and the milling step was carried out until the milling energy reached 23 kWh/kg.

### [Example 4]

An anode active material was prepared in the same manner as in Example 1, except that the milling step was carried out until the milling energy reached 17 kWh/kg.

### [Example 5]

An anode active material was prepared in the same manner as in Example 1, except that the heat-treatment time in the heat-treatment step was adjusted to 10 hours and the milling step was carried out until the milling energy reached 17 kWh/kg.

### [Comparative Example 1]

An anode active material was prepared in the same manner as in Example 1, except that the heat-treatment temperature in the heat-treatment step was adjusted to 800°C.

### [Comparative Example 2]

An anode active material was prepared in the same manner as in Example 1, except that the heat-treatment temperature in the heat-treatment step was adjusted to 700°C.

### [Comparative Example 3]

An anode active material was prepared in the same manner as in Example 1, except that the heat-treatment temperature in the heat-treatment step was adjusted to 600°C.

### [Comparative Example 4]

An anode active material was prepared in the same manner as in Example 1, except that the heat-treatment temperature in the heat-treatment step was adjusted to 500°C.

### [Comparative Example 5]

An anode active material was prepared in the same manner as in Example 1, except that the heat-treatment temperature in the heat-treatment step was adjusted to 1,000°C.

The milling energy and heat-treatment conditions of Examples 1 to 5 and Comparative Examples 1 to 5 are summarized in Table 1 below.

**Table 1**

| | Heat-treatment temperature (°C) / time (h) | Milling energy (kWh/kg) |
|---|---|---|
| Example 1 | 900°C / 5h | 20 |
| Example 2 | 900°C / 10h | 20 |
| Example 3 | 900°C / 10h | 23 |
| Example 4 | 900°C / 5h | 17 |
| Example 5 | 900°C / 10h | 17 |
| Comparative Example 1 | 800°C / 5h | 20 |
| Comparative Example 2 | 700°C / 5h | 20 |
| Comparative Example 3 | 600°C / 5h | 20 |
| Comparative Example 4 | 500°C / 5h | 20 |
| Comparative Example 5 | 1000°C / 5h | 20 |

### [Preparation Example]

### Fabrication of Coin Half-Cell

An anode slurry was prepared by uniformly mixing each of the anode active materials prepared according to Examples 1 to 5 and Comparative Examples 1 to 5, a conductive agent (carbon nanotubes, CNT), and binders (styrene-butadiene rubber, SBR; and carboxymethyl cellulose, CMC) in a weight ratio of 95:2:1.5:1.5.

The prepared anode slurry was coated onto a copper foil current collector having a thickness of 10 µm. The coated electrode sheet was dried at 110°C for 20 minutes and subsequently pressed to prepare an anode having a composite electrode density of 1.1 g/cc.

Lithium metal was used as a counter electrode. A polyethylene (PE) separator was employed as a separator. As an electrolyte, a solution of 1.0 M LiPF₆ dissolved in a mixed solvent of ethylene carbonate (EC) and diethyl carbonate (DEC) at a volume ratio of 3:7 was used. Using the above components, a CR2032-type coin half-cell was assembled.

### Evaluation Example 1: Analysis of Grain Size of Metal Particles (Si)

The grain sizes of the metal particles (Si) in the anode active materials prepared according to Examples 1 to 5 and Comparative Examples 1 to 5 were analyzed, and the results are summarized in Table 2 below.

**Table 2**

| | Grain size (nm) |
|---|---|
| Example 1 | 16.2 |
| Example 2 | 17.0 |
| Example 3 | 16.9 |
| Example 4 | 17.1 |
| Example 5 | 17.6 |
| Comparative Example 1 | 14.2 |
| Comparative Example 2 | 13.3 |
| Comparative Example 3 | 12.0 |
| Comparative Example 4 | 11.9 |
| Comparative Example 5 | 17.1 |

The grain size of the Si particles was measured using X-ray diffraction (XRD). That is, the grain size of the metal particles was determined by applying the Scherrer equation to a specific diffraction peak obtained from the XRD measurement.

The results show that the grain sizes of the Si particles in the anode active materials of Examples 1 to 5 are larger than those in Comparative Examples 1 to 4.

That is, from Table 1 and Table 2, it is observed that the grain size increases as the heat-treatment temperature becomes higher.

Furthermore, when comparing the grain sizes of the Si particles in the anode active materials of Examples 1 and 2, as well as those of Examples 4 and 5, the grain size increases as the heat-treatment time becomes longer.

In particular, the results reveal that the heat-treatment temperature is a more influential factor than the heat-treatment time in determining the grain size.

Meanwhile, it is also revealed that the total energy applied during a nanosizing process affects the grain size.

For example, the grain sizes of the Si particles in the anode active materials follow the relationship: Example 3 < Example 2 < Example 5. This indicates that as the milling energy supplied during the nanosizing process increases, the grain size of the final anode becomes smaller.

Furthermore, when comparing Example 1 and Example 4, the grain size of the Si particle in Example 4 is larger than that in Example 1, further confirming that higher milling energy leads to smaller grain size in the final anode.

Additionally, it is found although the crystallinity of silicon may be partially degraded during the nanosizing process, the crystallinity of silicon is restored in the subsequent heat-treatment step.

### Evaluation Example 2: BET Analysis

The specific surface areas of the anode active materials prepared according to Examples 1 to 5 and Comparative Examples 1 to 5 were measured using a TriStar II 3020 instrument (Micromeritics). The results are summarized in Table 3 below.

**Table 3**

| | Specific surface area (m²/g) |
|---|---|
| Example 1 | 3.4 |
| Example 2 | 3.1 |
| Example 3 | 3.5 |
| Example 4 | 3.1 |
| Example 5 | 3.0 |
| Comparative Example 1 | 4.7 |
| Comparative Example 2 | 7.5 |
| Comparative Example 3 | 100.4 |
| Comparative Example 4 | 99.3 |
| Comparative Example 5 | 3.0 |

The specific surface area was measured by determining the amount of nitrogen gas adsorbed as a function of relative pressure at the liquid nitrogen temperature (77 K).

The results show that the anode active materials of Comparative Example 3 (heat-treatment temperature: 600°C) and Comparative Example 4 (heat-treatment temperature: 500°C) exhibit significantly larger specific surface areas than those of Examples 1 to 5.

That is, it is found that the extremely high specific surface areas of the anode active materials of Comparative Examples 3 and 4 increase the viscosity of the anode slurry during electrode preparation to such an extent that anode coating became impracticable.

Furthermore, the anode active materials of Comparative Examples 1 and 2 exhibit somewhat higher specific surface areas than those of Examples 1 to 5.

Meanwhile, the anode active material of Comparative Example 5 exhibits a specific surface area comparable to those of Examples 1 to 5.

In conclusion, the BET values in the anode active materials of Comparative Examples 1, 2, and 5 and Examples 1 to 5 remain below a relatively normal range (≤ 10).

Accordingly, high-capacity (HC) evaluation was performed on the coin half-cells prepared using the anode active materials of Examples 1 to 5 and Comparative Examples 1, 2, and 5.

### Evaluation Example 3: Battery Performance Evaluation

The electrochemical properties of the coin half-cells fabricated using the anode active materials of Examples 1 to 5 and Comparative Examples 1, 2, and 5 were evaluated as follows.

Each of the coin half-cells fabricated using the anode active materials of Examples 1 to 5 and Comparative Examples 1, 2, and 5 was discharged at 25°C at a constant current of 0.1 C rate until the voltage reached 0.01 V (vs. Li). Thereafter, constant voltage discharge was performed while maintaining 0.01 V until the current decreased to 0.05 C. After the discharge was completed, the cell was allowed to rest for 10 minutes, and then the cell was charged at a constant current of 0.1 C until the voltage reached 1.5 V (vs. Li). Here, "C" represents the charge rate of the cell, which is defined as a value obtained by dividing the total capacity of the cell by the total charge time.

For the cells fabricated using the anode active materials of Examples 1 to 5 and Comparative Examples 1, 2, and 5, the initial charge capacity and the initial coulombic efficiency were measured, and the results are summarized in Table 4 below.

The initial charge capacity refers to the charge capacity in the first cycle.

The initial coulombic efficiency was calculated according to the following Equation 3:
$Initial coulombic efficiency \left[%\right] = \left[1st charge capacity/1st discharge capacity\right] \times 100$

**Table 4**

| | Initial charge capacity (mAh/g) | Initial coulombic efficiency, ICE (%) |
|---|---|---|
| Example 1 | 1403 | 88.0 |
| Example 2 | 1424 | 89.0 |
| Example 3 | 1426 | 88.7 |
| Example 4 | 1425 | 88.8 |
| Example 5 | 1453 | 89.5 |
| Comparative Example 1 | 1353 | 86.2 |
| Comparative Example 2 | 1315 | 85.7 |
| Comparative Example 5 | 1236 | 82.1 |

Referring to Table 4, the secondary batteries using the anode active materials of Examples 1 to 5 are found to exhibit an initial charge capacity of 1,400 mAh/g or more and an initial coulombic efficiency of 88.0% or more.

More specifically, the secondary batteries using the anode active materials of Examples 1 to 5 show an initial charge capacity of 1,403 to 1,453 mAh/g and an initial coulombic efficiency of 88.0% to 89.5%.

On the contrary, the secondary batteries using the anode active materials of Comparative Examples 1, 2, and 5 show an initial charge capacity of 1,236 to 1,353 mAh/g and an initial coulombic efficiency of 82.1% to 86.2%.

From Table 2 and Table 4, it is revealed that as the grain size of the metal particle in the anode active material increases, the internal resistance of the anode material decreases, thereby enabling higher charge capacity and higher initial coulombic efficiency.

That is, in the case of the secondary batteries using the anode active materials of Comparative Examples 1, 2, and 5, in which the grain size of the metal-containing particle exceeds the range of 15 to 20 nm, the charge capacity and initial coulombic efficiency of the secondary batteries are lower than those of the secondary batteries using the anode active materials of Examples 1 to 5.

Meanwhile, in the case of the secondary battery using the anode active material of Comparative Example 5, although the grain size of the metal-containing particle falls within the range defined herein, the charge capacity and initial coulombic efficiency are still lower than those of the secondary batteries using the anode active materials of Examples 1 to 5.

This is presumed to be because excessive heat treatment during the manufacturing process caused silicon and carbon to react with each other, resulting in the formation of silicon carbide (SiC).

Since silicon carbide (SiC) acts as an electrochemically inactive material, it reduces the amount of active silicon and increases the resistance within the electrode, thereby ultimately deteriorating the electrochemical performance of the battery.

### Evaluation Example 4: Incremental Capacity Analysis (ICA) of Half-cells

The incremental capacity analysis (ICA) of the half-cells was performed under the following conditions:
a. The half-cell was configured with an anode;
b. The discharge process (lithiation) was carried out from the open circuit voltage (OCV) down to 0.01 V;
c. The charge process (delithiation) was carried out from 0.01 up to 1.5 V;
d. The current density was set to 0.1 C;
e. The data recording interval was set to one data point per minute (1 point/min), and the cycling was conducted for at least 10 hours to collect 600 or more data points.

In this case, charge process data obtained from the ICA was utilized for analysis.

In the present disclosure, for the half-cell at 25°C, the discharge process (lithiation) was conducted from the open circuit voltage (OCV) to 0.01 V, and the charge process (delithiation) was carried out from 0.01 to 1.5 V, while performing charge-discharge cycles under a constant current condition of 0.1 C.

That is, a charge curve of a charge-discharge cycle measured by the incremental capacity analysis (ICA) was converted into a differential capacity versus voltage curve (dQ/dV) by normalizing the charge curve with respect to the total charge capacity of each cell, in order to compensate for capacity deviations between individual cells, and peak analysis was subsequently performed based on the resulting curve.

Specifically, Peak A, defined as the maximum peak height observed in a voltage region of 0.4 to 0.5 V, may represent a signal that becomes more pronounced as the crystallinity of the silicon-based anode material increases. This peak may be interpreted as reflecting a characteristic voltage region associated with specific phase transition reactions occurring during the interaction between silicon and lithium.

Additionally, Peak B, defined as the maximum peak height observed in a voltage region of 0.1 to 0.2 V, may be interpreted as a signal that reflects the characteristic voltage response generated when crystalline carbon, such as highly ordered graphitic carbon, present in an electrode interacts with lithium ions through intercalation and delithiation reactions.

That is, the maximum peak height (Peak A) observed in the voltage region of 0.4 to 0.5 V may be interpreted as reflecting the crystallinity and phase transition behavior of the silicon-based anode material, whereas the maximum peak height (Peak B) observed in the voltage region of 0.1 to 0.2 V may be interpreted as reflecting the structural characteristics of crystalline carbon.

For the half-cells using the anode active materials prepared according to Examples 1 to 5 and Comparative Examples 1, 2, and 5, the Peak A values and the Peak A/Peak B ratios were measured by the ICA, and the results are summarized in Table 5 below.

**Table 5**

| | Peak A(V⁻¹) | Peak A/Peak B |
|---|---|---|
| Example 1 | 4.08 | 2.22 |
| Example 2 | 5.14 | 3.31 |
| Example 3 | 4.78 | 2.74 |
| Example 4 | 4.99 | 3.03 |
| Example 5 | 6.08 | 4.16 |
| Comparative Example 1 | 3.35 | 1.65 |
| Comparative Example 2 | 2.96 | 1.4 |
| Comparative Example 5 | 2.53 | 1.14 |

The Peak A values measured by the ICA for the half-cells containing the anode active materials of Examples 1 to 5 are greater than those measured for the half-cells containing the anode active materials of Comparative Examples 1, 2, and 5.

Additionally, the Peak A/Peak B ratios measured by the ICA for the half-cells containing the anode active materials of Examples 1 to 5 are also greater than those measured for the half-cells containing the anode active materials of Comparative Examples 1, 2, and 5.

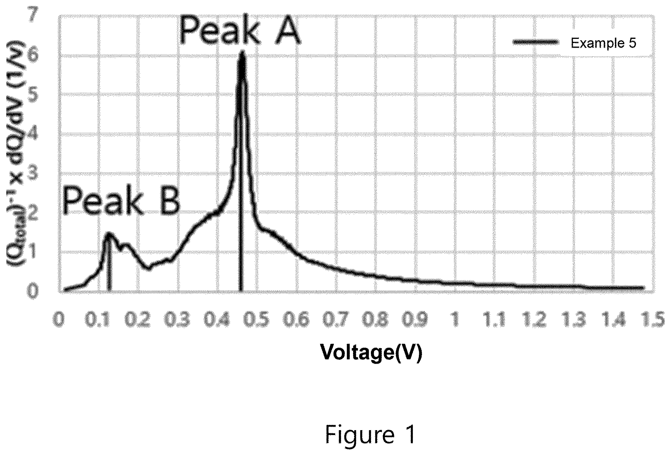

For example, as shown in Table 5 and FIG. 1, when the Peak A value measured by the ICA for the half-cell containing the anode active material of Example 5 is 6.08 V⁻¹ and the Peak B value is 1.46 V⁻¹, the Peak A/Peak B ratio is 4.16.

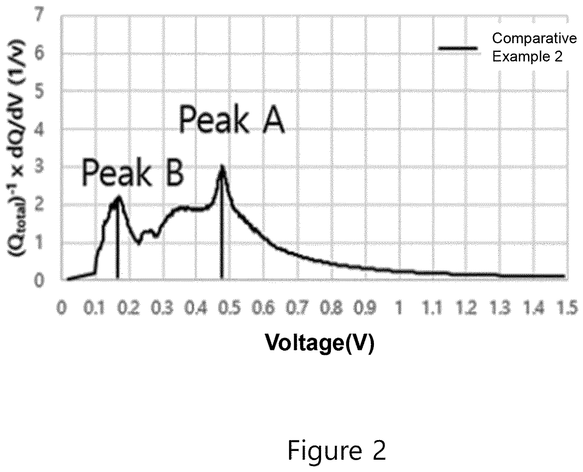

Additionally, as shown in Table 5 and FIG. 2, when the Peak A value measured by the ICA for the half-cell containing the anode active material of Comparative Example 2 is 2.96 V⁻¹ and the Peak B value is 2.11 V⁻¹, the Peak A/Peak B ratio is 1.4.

Meanwhile, although the anode active material of Comparative Example 5 has a grain size of the metal-containing particle within the range defined herein, the secondary battery using this material is found to exhibit lower charge capacity and initial coulombic efficiency compared to the secondary batteries using the anode active materials of Examples 1 to 5.

This is presumed to be due to the formation of silicon carbide (SiC) caused by the high heat-treatment temperature of 1,000°C during the preparation process of the anode active material of Comparative Example 5. As a result, the Peak A, which reflects the crystallinity of the silicon anode material, is weakly observed at 2.53 V⁻¹. Furthermore, the Peak A/Peak B ratio is 1.14, which falls outside the range defined herein.

Therefore, when the maximum peak height (Peak A) observed in the voltage region of 0.4 to 0.5 V is maintained at 4 V⁻¹ or greater, preferably 5 V⁻¹ or greater, it indicates that the formation of silicon carbide (SiC) has been effectively suppressed.

Additionally, when the Peak A value reaches 4 V⁻¹ or greater, preferably 5 V⁻¹ or greater, it suggests that the crystallinity of the silicon material has been recovered, thereby enabling the achievement of high charge capacity and high initial coulombic efficiency.

That is, the secondary batteries manufactured using the anode active materials of Examples 1 to 5, in which the ratio (Peak A/Peak B) of the maximum peak height (Peak A) observed in the voltage region of 0.4 to 0.5 V to the maximum peak height (Peak B) observed in the voltage region of 0.1 to 0.2 V is 2 to 5, are confirmed to suppress the formation of silicon carbide (SiC) and ensure crystallinity recovery, thereby achieving higher charge capacity and higher initial coulombic efficiency compared to the secondary batteries manufactured using the anode active materials of Comparative Examples 1, 2, and 5.

In conclusion, the high-capacity evaluation (HC) results demonstrate that the internal resistance of the anode material decreases with the increase in the grain size, resulting in higher charge capacity and higher initial coulombic efficiency.

Meanwhile, in Comparative Example 5, although the grain size of the metal-containing particle falls within the range defined herein, the intensity of Peak A is significantly weaker, which is presumed to indicate that silicon carbide (SiC) was formed due to excessive heat-treatment temperature during the manufacturing process.

Therefore, by correlating the results of the high-capacity evaluation with those of the incremental capacity analysis, it becomes possible to determine whether the grain size of the metal-containing particle falls within an appropriate range and whether the formation of silicon carbide (SiC) have occurred. This combined analytical approach enables the derivation of optimal electrode fabrication conditions.

Furthermore, these analytical findings are expected to provide significant technological advancement in the development of anode materials for next-generation lithium-ion batteries, particularly those requiring high capacity and high initial coulombic efficiency.

The scope of the present disclosure is defined by the appended claims rather than the above detailed description, and all changes or modifications derived from the meaning and range of the appended claims and equivalents thereof are to be interpreted as being included within the scope of present disclosure.

## Claims

1. An anode active material, wherein when a charge curve of a charge-discharge cycle measured by incremental capacity analysis (ICA) is converted into a differential capacity versus voltage curve (dQ/dV) by normalizing the charge curve with respect to a total charge capacity of each cell, a maximum peak height (Peak A) observed in a voltage region of 0.4 to 0.5 V is equal to or greater than 3.5 V⁻¹,
wherein the ICA is performed on a half-cell including the anode active material.

2. The anode active material of claim 1, wherein a maximum peak height (Peak B) observed in a voltage region of 0.1 to 0.2 V is equal to or greater than 0.5 V⁻¹.

3. The anode active material of claim 2, wherein a ratio of the maximum peak height (Peak A) observed in the voltage region of 0.4 to 0.5 V to the maximum peak height (Peak B) observed in the voltage region of 0.1 to 0.2 V (Peak A/Peak B) is equal to or greater than 2.

4. The anode active material of claim 1, wherein the anode active material includes at least one metal-containing particle,
wherein the metal-containing particle includes at least one selected from the group consisting of Si, Al, Sn, Ge, Pb, In, As, Sb, P, and Ag.

5. The anode active material of claim 4, wherein the metal-containing particle has a grain size of equal to or greater than 15 nm.

6. The anode active material of claim 4, wherein the metal-containing particle has a volumetric median particle diameter (Dv50) of 80 to 200 nm.

7. The anode active material of claim 4, wherein the anode active material further includes amorphous carbon, crystalline carbon, or a combination thereof.

8. The anode active material of claim 1, wherein the anode active material has a volumetric median particle diameter (Dv50) of 3 to 20 µm.

9. A method for preparing the anode active material of any one of claims 1 to 8, the method comprising:
a first step of pulverizing a metal-containing particle;
a second step of preparing a precursor powder by spray-drying a solution containing the pulverized metal-containing particle;
a third step of mixing and compositing the precursor powder with amorphous carbon, crystalline carbon, or a combination thereof;
a fourth step of heat-treating the composited powder,
wherein the metal includes at least one selected from the group consisting of Si, Al, Sn, Ge, Pb, In, As, Sb, P, and Ag, and
the first step is performed with a milling energy of equal to or greater than 7 kWh/kg.

10. The method of claim 9, wherein a heat-treatment temperature in the fourth step is 850°C to 950°C.

11. A lithium secondary battery, comprising:
an anode including the anode active material of any one of claims 1 to 8;
a cathode positioned opposite to the anode; and
an electrolyte disposed between the anode and the cathode.
